(19) Europäisches Patentamt
European Patent Office
Office européen des brevets

(11) **EP 4 632 684 A1**

(12) **EUROPEAN PATENT APPLICATION**

(43) Date of publication:
**15.10.2025 Bulletin 2025/42**

(21) Application number: **25169868.4**

(22) Date of filing: **10.04.2025**

(51) International Patent Classification (IPC):
*G06V 10/25* (2022.01)   *G06T 7/73* (2017.01)
*G06V 10/764* (2022.01)

(52) Cooperative Patent Classification (CPC):
**G06V 10/25; G06T 7/73; G06V 10/764;** G06V 20/58

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.04.2024 IT 202400008140**

(71) Applicant: **Comm3000 S.p.A.**
**20100 Milano (IT)**

(72) Inventor: **Fiorentino, Marco**
**Milano (IT)**

(74) Representative: **Caruti, Filippo et al**
**Thinx S.r.l.**
**P.le Luigi Cadorna, 10**
**20123 Milano (IT)**

(54) **METHOD AND SYSTEM TO ASSESS THE DISTANCE OF AN OBJECT FRAMED BY A CAMERA**

(57)   The present invention relates to a system for measuring a distance of an object (01-03). The system includes a single camera (2) and a processing device (3) connected to the camera (2).

The camera (2) captures an image that is received by the processing device (3). The processing device (3) runs an image recognition algorithm that, for each object recognised in the acquired image identifies a type to which the object belongs, and defines a bounding box that encloses the object.

In addition, the processing device (3) determines a reference dimension of the bounding box. In particular, the portable device corrects the reference dimension of the bounding box of the recognised object by applying a correction criterion selected according to the value of at least one pre-stored parameter associated with the type of the recognised object and at least one feature of the bounding box of the recognised object. Finally, the processing device (3) calculates the distance to the object according to the reference dimension thus corrected and at least one comparison dimension stored in the system.

Fig.1

## Description

## TECHNICAL FIELD

The present invention relates to the field of image processing for the purpose of estimating the distance of one or more framed objects. The invention is particularly applied in portable systems, especially personal systems (e.g., wearables). For example, the invention is used in collision avoidance systems, and particularly in systems designed to warn a user, skier, cyclist a motorcyclist or the like of a possible impending impact with an object outside the user's field of view.

## STATE OF THE ART

Nowadays, object detection around an item of interest, particularly in motion, is a feature used in many application areas, independently in traffic surveillance systems - e.g., in order to detect infractions -, autonomous and/or assisted mobility systems, augmented reality systems, etc.

For example, in the field of movement, collision avoidance systems are becoming increasingly popular, particularly in the automotive sector, where cars are equipped with numerous sensors, capable of periodically detecting objects in the surrounding environment. In this area, systems based on the analysis of objects within frames acquired by cameras, data provided by RADAR, LIDAR and/or ultrasonic sensors are known.

Information about detected objects is, typically, provided to tracking systems, which assign a unique ID to each object detected at a given time and are able to follow each of these objects in subsequent frames in order to determine whether the object is approaching and assist the driver in avoiding collision with them.

For example, US 2009/0195371 and EP 3279830 describe anti-collision systems that can determine the distance from an object detected in an image by means of a tracker algorithm. The system uses simplified pre-processing expedients--compared to traditional object tracking algorithms--in order to initiate safety measures to mitigate the risk of collision in the automotive industry.

However, known systems include sensors that are expensive, bulky, energy-consuming and/or not adapted to personal use due to emitted radiation; in particular, these systems are inaccurate in the case of non-horizontal cameras and/or objects considered not to be upright or in objects whose face is not perpendicular to the camera due to yawing i.e., horizontal rotation of the camera and/or rotation of the object on its vertical axis.

These factors preclude their application in a variety of fields, such as motorcycling, cycling, aquatics (e.g., foiling), or skiing, where the risk of collision is high anyway. In particular, in skiing, bicycling, water-based activities and general personal use, radars and lidars, which would otherwise provide information even on the distance of objects, are not usable due to their weight, energy consumption and health-related issues - because of the intensity of electromagnetic radiation emitted. It is also impractical in these fields to estimate distance by parallax analysis between images obtained from multiple cameras due to the required minimum spacing between cameras and relative bulkiness. In these cases, therefore, it is possible to exploit systems comprising a single camera, downstream of which, as independently in US 2020/394435, object recognition algorithms based on machine vision, are performed to recognize the presence of certain categories of objects in the images and to of delimit them with bounding boxes, whose sides are parallel to the sides of the imaged image and whose two dimensions are analyzed to estimate the distance from each of these objects.

In this case, the only data available for each frame are, for each object recognised in the frame, the recognition confidence percentage, the two bounding box size, and the bounding box location.

However, in skiing, cycling and motorcycling, cameras are subject to numerous and unpredictable changes in tilt and orientation during use, which makes the point of view and field of view of the acquired images highly variable, unlike in the automotive field where variations in the tilt of the car are minimal. Tilting, especially in yaw, of the camera introduces errors in computer vision-based distance measurement systems because it results in the substantial variation in the size of the bounding box that delimits a given recognised object and thus an error in distance estimation. The same error arises in the case of objects that are not necessarily upright as is the case, for example, for skiers, cyclists, and motorcyclists when they are cornering. Again, the tilt of the object leads to a change in the size of the bounding box but without any information being provided regarding the tilt of the object within the bounding box. Again, changing the size of the bounding box for the same actual distance leads to corresponding error in the calculation of the object's distance. Another source of error is the rotation of the object on its vertical axis relative to the camera face, and again this leads to variation in the size of the bounding box at the same distance and thus to error in the distance calculation.

Other known systems such as US 2019/355140 describe systems based on stereoscopic vision and do not suffer from these errors, but as explained they are not usable for personal use as there is not enough space for a second camera at an adequate distance from the first. Monocular systems such as US 2020/394435 are not adequate as they are subject to the errors mentioned above. Finally, systems such as US 2019/318481 describe how to correct the error due to the vertical tilt, i.e., pitch, of the camera in the automotive domain but require at least a second means of distance estimation for at least one of the imaged objects, in the specific case via LIDAR, RADAR, SONAR, or unspecified machine learning algorithm to determine the need for pitch correction and apply it. However, as was explained earlier, in the case of portable personal use, tools such as LIDAR or similar detectors cannot be equipped, while the use of machine learning to estimate the distance from an object, assuming it is feasible in practice, still involves a significant computational load that would impose heavy requirements on the hardware required for such an application. In addition, US 2019/318481 makes correction only for a change in the camera on its vertical axis, but does not allow correction of errors due to yawing of the camera, which is very common in non-automotive personal use, nor does it allow correction of errors due to a change in tilt or rotation of the observed object, which is also very common in the case of, for example, skiers, cyclists and motorcyclists.

In the fields mentioned above, there is a need for systems capable of detecting objects in the surrounding environment and estimating their distance by correcting the errors mentioned above in a quick, low-energy way and using a single camera as a sensor, especially for providing a portable personal collision avoidance systems. For example, it frequently happens that skiers are run over by other skiers coming from a direction outside the skier's field of view, e.g. from behind, with sometimes fatal consequences. Similarly, bicyclists or motorcyclists are frequently struck or run over by cars or other vehicles on the road, which are approaching from a direction outside the driver's field of vision.

Thus, there is a felt need for a system capable of determining with adequate reliability the distance from one or more objects that is lightweight, does not use bulky and energy-intensive hardware such as radar or lidar, does not require two or more cameras or require special camera orientation, can determine whether correction is needed, and in case, make correction to the error introduced for rotation on or around the vertical of objects and/or camera rotation that does not require high computational capacity, does not require high power consumption, and does not emit harmful radiation to a user carrying such hardware or located near it.

## SUMMARY OF THE INVENTION

The purpose of the present invention is to overcome the drawbacks of the prior art.

In particular, the purpose of the present invention is to provide a system and a method capable of robustly and reliably estimating the distance between an object framed by a single camera and the camera itself, without the aid of additional cameras or other types of sensors (e.g.: RADAR, LIDAR, SONAR, etc.) or distance measurement systems based on machine learning, which are computationally expensive.

The system and method according to the present invention determine the need to correct and correct errors caused by variations in the system camera setup and/or inclinations/rotations of the objects imaged with respect to their vertical/horizontal. Advantageously, each necessary correction is applied using only the data of the bounding boxes provided by the system for an object imaged in the image, preferably through a machine vision algorithm.

Furthermore, it is a purpose of the present invention to provide a system and method adapted to determine whether the data provided by the machine vision system is unreliable.

It is an additional purpose of the present invention to provide a system and method that are not harmful to health, particularly those that are not based on potentially harmful electromagnetic radiation, for example, radar waves or laser light.

Further, it is a purpose of the present invention to provide a system that is portable, preferably wearable, that is lightweight, unobtrusive, and that requires little electrical energy for operation.

These and further objects of the present invention will be clearer from the following description and from the annexed claims, which are an integral part of the present description.

According to a first aspect, the invention therefore relates to a system for measuring the distance of an object. The system comprises a single camera and a processing device connected to the camera. The camera acquires an image that is received by the processing device. The processing device, for each identifiable object type of a plurality of types, pre-memorizes at least one parameter among an expected form factor between height and width of the bounding box of at least one reference object, an expected depth data (preferably, assigned as a function of the variation of the measured form factor of the reference object as the rotation angle of a front face of the same with respect to the camera varies), and an expected verticality datum (preferably, determined on the basis of at least one reference object of the object type, a positioning of the camera and/or presence/absence of a horizon correction of the image acquired by the camera).

The processing device executes an image recognition algorithm that, for each object recognised in the acquired image, identifies a type to which the object belongs among the plurality of identifiable object types-for example, included in a list of possible objects. Typically, the image recognition algorithm is based on computer vision, and the plurality of identifiable object types comprises object types or object-types used during the training of the algorithm itself.

For example, image processing may be performed by an object recognition algorithm based on computer vision. Preferably, the algorithm is a convolutional neural network or CNN (Convolutional Neural Network), independently of the fast R-CNN or faster R-CNN type. In a non-limiting embodiment, the computer vision algorithm is trained to recognize images using a generic dataset such as COCO 2017 that includes objects such as people (skiers), vegetation, and/or vehicles. More generally, the computer vision algorithm is trained using at least one dataset specific to the field of use of the system.

For each recognised object, the system defines a bounding box that encloses the object. In general, the bounding box is a rectangle whose horizontal sides are parallel to the upper and lower edges of the image supplied to the processor, and whose dimensions are such as to enclose the horizontal and vertical ends of the recognised object.

The system comprises calculating a reference dimension of the bounding box - for example, its diagonal, its area, or the number of pixels it contains. The system corrects the reference dimension of the bounding box of the recognised object by applying a correction criterion. Advantageously, the correction criterion is selected according to the value of the at least one pre-stored parameter associated with the type of the recognised object and at least one characteristic of the bounding box of the recognised object (e.g., a shape factor, an area, etc.). Finally, the system calculates a distance from the recognised object according to the reference dimension thus corrected and at least one comparison dimension stored in the system, where the at least one comparison dimension is associated with a respective bounding box enclosing a known object of the same type located at a known distance.

Thanks to the system of the present invention it is possible to obtain an estimate of the distance of the recognised object without resorting to stereoscopic systems. Furthermore, it is possible to obtain this estimate of the distance, substantially in real time even in systems comprising limited hardware resources. Furthermore, the system provides reliable estimates by correcting any estimation errors. In fact, the estimate of the distance of an object based on images can be distorted by the non-alignment and/or rotation of the vertical of the camera with respect to the vertical of the object, hereinafter referred to as "tilt error" and/or distorted due to the rotation of the object on itself (around its own vertical) with respect to the camera - in particular, to the framing of the camera in a horizontal sense, hereinafter referred to as "rotation error". For example, the bounding box of a skier tilted with respect to the camera is much wider and only slightly lower than that of a skier standing upright with respect to the camera, thus leading to a larger diagonal than would have been the case if the skier at the same distance were not tilted, and therefore there is a tilt error that leads to an underestimation of the distance. Conversely, the bounding box of a very wide and shallow object whose main face is not directly facing the camera (i.e., the object is rotated around its vertical with respect to a position where its main face is facing the camera) leads to a narrower bounding box than expected, hence with a shorter diagonal. Consequently, in this case the rotation error leads to an overestimation of the actual distance. On the contrary, in the case of an object that is very deep with respect to its height, such as a bus, the rotation error introduced by the rotation of the object with respect to the camera leads to an underestimation of the distance.

In real-life conditions, these errors are very common. For example, the tilt error can be due to the inclination of the camera itself compared to the horizon, almost certain if worn by a user on the move and without systems of horizon correction (adapted to rotating the image so that the horizon is always parallel to the upper and lower edges of the image), or can be due the inclination of the object recognised with respect to the horizon for types of objects such as skiers, cyclists, motorcyclists, bicycles and motorcycles that can be tilted with respect to the horizon and/or the camera even if the latter is equipped with horizon correction (unlike cars, trees, etc. which are typically not tilted with respect to the horizon). Instead, the rotation error occurs in all cases where the main face of the object is not facing exactly in the direction of the camera (that is, substantially parallel to the plane of the image acquired).

The system of the present invention allows automatically correcting these errors and substantially in real time by identifying whether and what correction criterion is to be applied depending on pre-stored information about the type of object being considered and information about the bounding box of the object being considered. In other words, the system provides a fine estimation of the distance from one or more objects recognised by the camera with a substantially low computational cost compared to known systems and using only one camera as the detector (i.e., no use is made of other sensors - e.g., SONAR, LIDAR, RADAR - and/or methods e.g., machine learning algorithms of coarse distance estimation, provided they are achievable).

The above parameters can be calculated from images acquired with cameras with characteristic parameters different from those of the camera included in the system. In this case, any differences between the two (or more) cameras (e.g., ratio between vertical and horizontal resolution and other technical parameters) are compensated, so that the stored parameters are equivalent to parameters calculated from images acquired with a camera with characteristic parameters equivalent to those of the system camera.

Optionally, for each estimated distance value the system indicates a corresponding degree of reliability of the estimate.

In an embodiment, the at least one pre-stored parameter for each object type is determined by recognizing a reference object in a reference image, and creating a corresponding reference bounding box. Preferably, the vertical axis of the reference object is parallel to the vertical axis of the camera and the front face of the reference object is perpendicular to an image plane.

In an embodiment, the expected depth data for each type of object with square profile is a logical data with true value if:

$$cos(Am) + sin(Am)/Rp < 1$$

where Am is a maximum trajectory angle of the object type with respect to the camera - defined in more detail below - and Rp is an average width to depth ratio of the object type, and otherwise the expected depth data takes on a false value.

In one embodiment, the expected verticality data, also indicated as parameter of possible non-verticality, depends on whether the vertical axis of the object type is definitely aligned or not with that of the vertical edges of the image. The parameter of possible non-verticality is true only for objects that generally "do not tilt" (independently cars, buses) and that at the same time are captured by a camera with a horizontal position or equipped with horizon correction.

Preferably, the processing device for each type of object pre-memorizes all the parameters, i.e.: the expected form factor, the expected depth data and the expected verticality data. Furthermore, it selects which correction to apply to the reference dimension based on the value of said pre-memorized parameters associated with the type of recognised object and with a form factor of the bounding box of the recognised object.

In one embodiment, the processing device corrects the reference dimension by applying a tilt error correction criterion by computing a corrected bounding box having the expected form factor and with corners lying on the sides of the bounding box of the recognised object.

Preferably, but not exclusively, the processing device identifies the need for a single tilting error correction when:

$$Ra > 1, Pa = false, Va = false \text{ and } Rm < Ra,$$

or

$$Ra < 1, Pa = true \text{ e } Rm > Ra$$

where Ra is the expected form factor for the type of object recognised, Pa is the expected depth value, Va is the expected verticality value and Rm is the measured form factor.

The correction of the tilt error is carried out on the basis of the measured and expected form ratios only. In addition, the correct form factor can be determined by geometrical/trigonometric techniques, preferably by calculating a corrected bounding box having the expected form factor and with angles lying on the sides of the bounding box of the recognised object. Therefore, the system according to the present invention allows to effectively correct any tilt errors through a series of operations of low computational complexity.

Preferably, the system includes an algorithm or other horizon correction function. Horizon correction allows eliminating tilt error occurrences due to a non-horizontal yaw orientation of the camera. Thanks to the use of horizon correction, tilt error compensation occurs only for objects that by nature are not necessarily in a vertical position (e.g., skiers, cyclists, etc.). In this case only this last group of object types have a parameter Pa = false. Otherwise, if horizon correction is not available all possible object types have a parameter Pa = false.

In one embodiment, the portable device corrects the reference dimension by applying a rotation error correction criterion by calculating a correct width of the bounding box as the ratio between a height of the bounding box enclosing the object the expected form relationship for the type of object recognised. Preferably, but not exclusively, the processing device identifies the need for a single rotation error correction when:

$$Ra > 1, Pa = false, Va = false \text{ e } Rm > Ra,$$

$$Ra > 1, Pa = false, Va = true \text{ e } Rm > Ra,$$

$$Ra > 1, Pa = true, Va = true \text{ e } Rm < Ra,$$

$$Ra < 1, Pa = false, Va = true \text{ e } Rm > Ra,$$

$$Ra < 1, Pa = true, \text{ e } Rm < Ra,$$

$$Ra \approx 1, \text{ preferably } 1-x\% \leq Ra \leq 1+x\%, \text{ with } 0 \leq x \leq 20, Pa = false, \text{ e } Rm > Ra, o$$

$$Ra \approx 1, \text{ preferably } 1-x\% \leq Ra \leq 1+x\%, \text{ with } 0 \leq x \leq 20, Pa = true, \text{ e } Rm < Ra,$$

wherein Ra is the expected form factor for the recognised object typology, Pa is the expected depth data, Va is the expected verticality data and Rm is the measured form factor.

The rotation error correction is applied starting from the height data of the bounding box of the recognised object and the expected form factor (i.e., pre-stored for that type of object). Similar to the tilt error correction, the rotation error is also compensated for by extremely low computational cost operations.

Furthermore, the applicant noted that there are cases in which it is certain that at least one of the tilt and rotation corrections should be applied but it is not possible to establish which of the two corrections to apply and/or cases in which the vertical axis of the imaged object is simultaneously tilted with respect to the vertical edges of the image and the object is also rotated on itself. For simplicity, this case is hereafter referred to as "Composite Error". In these cases, a corrected reference dimension of the bounding box is calculated as the average of a first reference dimension calculated by applying the tilt error correction to the bounding box that encloses the recognised object and a second reference dimension calculated by applying the rotation error correction to the bounding box that encloses the recognised object. Preferably, when the composite error correction is applied, the system signals that the data obtained by means of this correction has lower reliability than when only one tilt error correction or only one rotation error correction is applied.

In other words, according to this embodiment, the processing device corrects the reference dimension by applying a composite error correction criterion by calculating a corrected reference dimension of the bounding box as the average of a first reference dimension calculated by applying the tilt error correction to the bounding box enclosing the recognised object and a second reference dimension calculated by applying the rotation error correction to the bounding box enclosing the recognised object.

Preferably, but not limitatively, the processing device identifies the need for a composite correction when:

$$Ra > 1, Pa = true, Va = false \ e \ Rm < Ra, o$$

$$Ra < 1, Pa = false, Va = false \ e \ Rm > Ra,$$

where Ra is the expected form factor for the type of object recognised, Pa is the expected depth data, Va is the expected verticality data.

The correction of a composite error is obtained by averaging the tilt and rotation corrections described above. Therefore, the correction of the composite error is also achievable with a rather low computational cost.

In one embodiment, the system reports cases where the information determined by the recognition algorithm is considered unreliable, or when, for example, it should not occur in reality, given the type of recognised object and the data derived from the bounding box of the recognised object. Preferably, but not limited to, the alert signal is generated when:

$$Ra > 1, Pa = false, Va = true \ e \ Rm < Ra,$$

$$Ra > 1, Pa = true \ e \ Rm > Ra,$$

$$Ra < 1, Pa = false \ e \ Rm < Ra,$$

$$Ra \approx 1, preferably \ 1-x\% \leq Ra \leq 1+x\%, con \ 0 \leq xa \leq 20, Pa = false, \ e \ Rm < Ra, o$$

$$Ra \approx 1, preferably \ 1-x\% \leq Ra \leq 1+x\%, con \ 0 \leq xa \leq 20, Pa = true, \ e \ Rm > Ra.$$

Preferably, when the system identifies one of these cases the data (i.e., one or more features) related to the bounding box of the recognised object are discarded as unreliable.

Finally, in one embodiment, a correction is not applied when:
$Rm = Ra \pm x\%, con \ 0 \leq x \leq 20$, where Rm is a form factor calculated by the processing device and Ra is the form factor expected for the type of object recognised. In other words, insignificant differences between Rm and Ra are not considered.

By identifying the need for correction and the type of correction required based on the reference dimension considered and pre-stored parameters for each possible type of identified object it is possible to calculate the fine estimate quickly and with a low computational cost, Allowing the system to function properly in substantially real time even when the system includes limited hardware resources - e.g., portable and/or consumer devices.

In one embodiment, each constant value stored by the processing device is a function of a comparison dimension associated with a comparison of the bounding box enclosing an object of the same type as the recognised object and located at a known distance, where the comparison dimension of the comparison bounding box is the same size as the reference dimension associated with the limiting box enclosing the object.

The system of the present invention makes it possible to obtain an estimate of the distance of the recognised object without resorting to stereoscopic systems or other sensors or machine learning systems. Furthermore, it is possible to obtain this estimate of the distance, substantially in real time even in systems comprising limited hardware resources.

In one embodiment, the comparison dimension is calculated starting from an image that portrays the known object with its vertical axis parallel to the vertical axis of the image and with the front face of the object parallel to the image plane.

In one embodiment, the reference dimension and the comparison dimension correspond to a diagonal of the bounding box that encloses the recognised object or the known object of the same type at a known distance from the system, respectively.

Thanks to these features, the system comprises the information necessary to determine the distance of a recognised object quickly and accurately, while containing the requirements relating to a storage space necessary for the system.

In one embodiment, the distance between the object and the camera is calculated by means of the relation:

$$Z = \frac{1}{D} Kc,$$

where D is the calculated diagonal of the recognised object bounding box, Kc is the constant value associated with the recognised object pre-stored on the device.

Preferably, the constant value Kc relative to each identifiable object type is determined by drawing one or more reference objects for each object type in a vertical position with its own front face (with respect to the typical direction of movement of the object itself) directly facing the camera, and with the vertical face of the object parallel to the axis of vision of the camera.

In one embodiment, the constant value is a function of the field of view associated with the camera and a measurement unit used to measure the size of the bounding box.

Preferably, the comparison dimension is calculated from a sample image acquired by a camera with known characteristic parameters (field of view and/or number of pixels), preferably identical or similar to the system camera. In other embodiments, the camera used to acquire the comparison images is different from the system camera. In this case, one or more characteristic parameters of the camera (e.g., field of view, horizontal and vertical resolution, form factor, etc.) that acquired the sample image are considered to compensate for the differences between the cameras, avoiding introducing errors in the calculation of the comparison dimension. Alternatively to the characteristic parameters of the two or more cameras, the compensation of the different cameras is based on one or more conversion parameters between the characteristic parameters of the system camera and one or more of the cameras used to acquire the reference dimension.

In an embodiment, the processing device is adapted to calculating a calculated distance reliability, where each reliability is calculated according to at least one parameter associated with the type of the corresponding recognised object and, preferably, a difference between an expected form factor for an object of the identified type and a measured form factor of the recognised object.

A different aspect of the present invention relates to a method to estimate a distance between an object and a system comprising a single camera and a processing device connected to the camera.

The method comprises acquiring at least one image with the camera. Furthermore, the method comprises that the processing device,

for each identifiable object type, pre-memorizes at least one parameter among:

an expected form factor between height and width of the bounding box of at least one reference object,
an expected depth datum (determined as a function of the variation of the measured form factor of the reference object as the rotation angle of a front face of the same with respect to the camera varies), and
an expected verticality datum (determined on the basis of the object type, a camera positioning
and/or presence/absence of a correction of the horizon of the image acquired by the camera).

Furthermore, the method provides that the electronic processor performs the steps of receiving the acquired image and executing an image recognition algorithm that, for each object recognised in the acquired image:

identifies the type to which the recognised object belongs among a plurality of identifiable object types, and
defines a bounding box that encloses the recognised object, and
determines a reference dimension of the bounding box.

Next, the computer performs the steps of determining a reference dimension of the bounding box and correcting the reference dimension of the recognised object bounding box by applying a correction criterion. The correction criterion is selected according to the value of at least one pre-stored parameter associated with the type of the recognised object and at least one characteristic of the recognised object bounding box. Finally, the electronic processor performs the step of calculating a distance from the recognised object as a function of the reference dimension thus corrected and at least one comparison dimension stored in the system. The at least one comparison dimension is associated with a respective bounding box that encloses a known object of the same type located at a known distance.

The method according to the present invention allows to obtain the same advantages described above for the system in its embodiments presented mutatis mutandis.

Further characteristics and purposes of the present invention will appear more clearly from the following description.

## BRIEF DESCRIPTION OF THE DRAWINGS

The invention will be described here below with reference to some examples provided by way of example and not as a limitation, and shown in the annexed drawings. These drawings show different aspects and embodiments of the present invention and, where appropriate, reference numerals showing like structures, components, materials and/or elements in different figures are denoted by like reference numerals.

Figure 1 is a schematic representation of a system according to an embodiment of the present invention used in skiing;

Figure 2 is a flow chart of an image processing procedure according to an embodiment of the present invention;

Figure 3A is a schematic representation of a frame acquired by a camera of the system of Figure 1;

Figure 3B corresponds to the frame of Figure 3A in which bounding boxes identified by the system of Figure 1 are shown;

Figure 3C is a graphic representation of principle of the information computed for a bounding box identified by the system in Figure 1;

Figure 4 is a flow chart of a procedure for calculating the distance to an object according to an embodiment of the present invention;

Figure 5 is a qualitative representation of a tilt error correction step included in the procedure of Figure 4;

Figure 6 is a flowchart of a procedure that detects and reports initiating objects according to one embodiment of the present invention, and

Figure 7 is a flowchart of an image processing procedure according to an alternative embodiment of the present invention.

## DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends to cover all the modifications and/or use of the elements or equivalent steps that fall within the scope of the invention as defined in the claims.

Unless otherwise defined, all the terms of the art, notations and other scientific terms used herein are intended to have the meanings commonly understood by those skilled in the art to which this description belongs. In some cases, terms with commonly understood meanings are defined herein for clarity's sake and/or ready reference; the insertion of such definitions in the present description must therefore not be interpreted as representative of a substantial difference with respect to what is generally understood in the art.

The terms "comprising", "having", "including" and "containing" are to be understood as open terms (i.e. the meaning "comprising, but not limited to") and are to be considered as a support also for terms such as "essentially consist of", "essentially consisting of", "to consist of" or "consisting of".

The use of "independently", "etc.", "or" denotes non-exclusive alternatives without limitation, unless otherwise noted. The use of "includes" means "includes, but not limited to", unless otherwise noted.

**EP 4 632 684 A1**

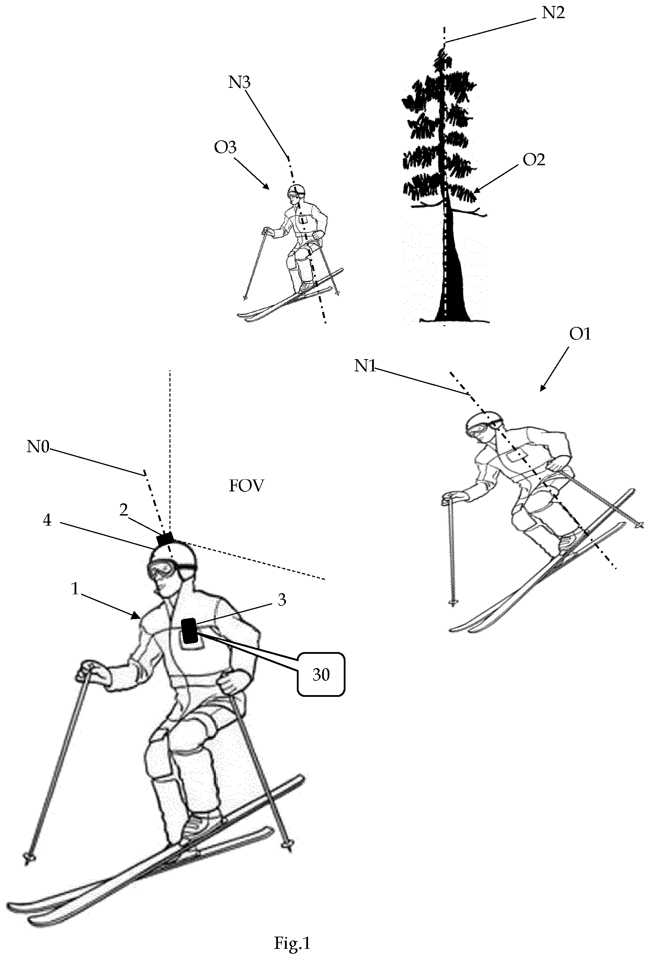

Figure 1 shows a skier 1 equipped with a camera 2 and a portable device 3, such as a smartphone, on which a software application 30 (hereinafter app) is installed, capable of communicating with the camera 2 and processing the images acquired by the camera. In an alternative embodiment (not illustrated), the camera 2 and the portable device 3 are included in a single element and/or are integrated into the helmet worn by the skier 1, as well as any acoustic sound reproducers, typically positioned in correspondence with the two ears of the user.

In a known manner, the camera 2 acquires a series of image frames, or frames, and transmits them to the portable device 3.

In the embodiment considered, the camera 2 is installed so as to capture a portion of space, i.e. to have a field of view FOV, not visible to the skier 1. For example, the camera 2 is fixed on a helmet 4 and aimed so as to frame the space behind the skier 1. Alternatively, the camera 2 can be fixed on another element, for example an item of clothing, such as a jacket of the skier 1.

The portable device 3 then runs the app 30 which implements an anti-collision method capable of reporting one or more objects - e.g., other skiers who are approaching the skier 1.

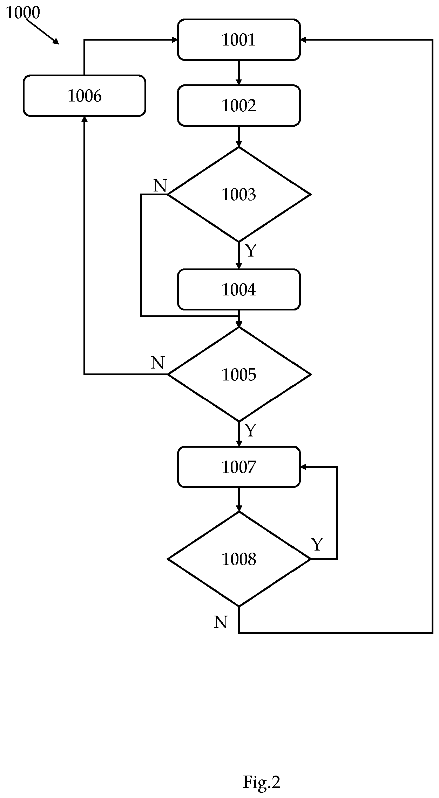

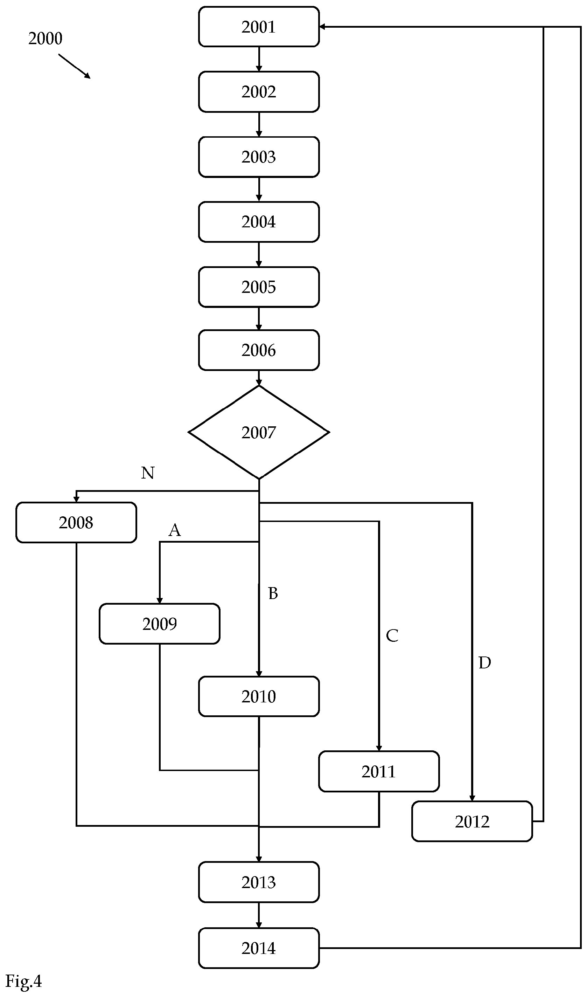

The anti-collision method according to the embodiments of this invention comprises, but is not limited to, a procedure 1000 for identifying objects, a distance calculation procedure 2000 and a procedure 3000 for detecting approaching objects, described below with reference to Figures 2, 4 and 6 respectively.

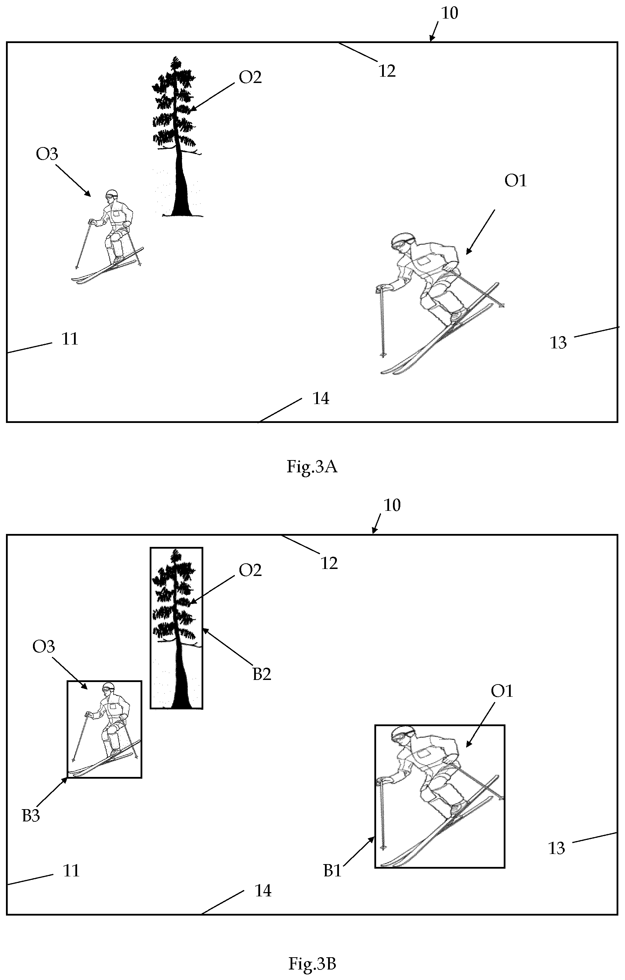

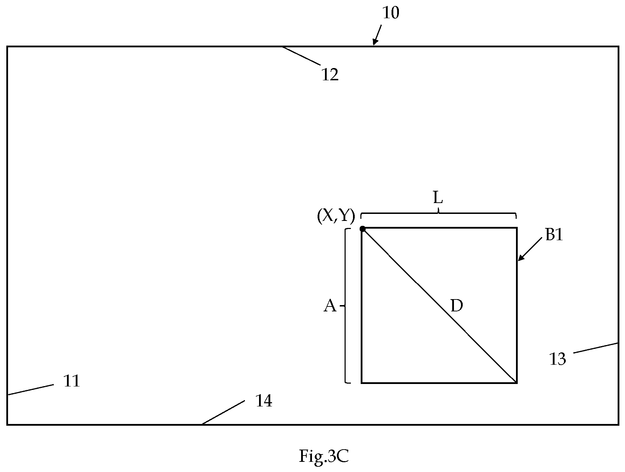

Procedure 1000 is adapted to identifying one or more objects 01-03 depicted in each frame 10 - schematically shown in Figure 3A - captured by camera 2. In particular, procedure 1000 robustly identifies the type of object 01-03 depicted in frame 10, its position in space with respect to camera 2 that generated frame 10 and, therefore, skier 1, and the size of the object 01-03 detected compared to the field of view of camera 2.

Each frame 10 generated by the camera 2 is received by the portable device 3 (step 1001) and preferably, but not exclusively, is associated with a corresponding timestamp ts (step 1002), or a sequence order of acquisition of the frames. For example, the timestamp ts is contained in metadata of the frame 10 generated by camera 2 or it is determined by portable device 3 upon receiving frame 10.

Optionally, and without limitation, any possible orientation of the camera 2 in a non-horizontal position, independently due to a non-upright position maintained by the skier 1. In particular, with "horizontal" orientation is an orientation of camera 2 where a pair of edges 11-14 in frame 10 is parallel to the horizon. In detail, it is optionally first checked if the camera 2 has a non-horizontal orientation (decision step 1003). In one embodiment, the orientation of camera 2 is identified using an algorithm of "horizon correction" and/or sensors placed on camera 2. If camera 2 is not in a horizontal position (output branch Y of step 1003), compensation is optionally performed by rotating the frame 10 at an angle such that the horizon in the frame is parallel to the real horizon (or, similarly, the direction of the acceleration of gravity is parallel to the direction of the real acceleration of gravity) (step 1004), where this angle is determined by means of the algorithm and/or sensors placed on camera 2 in a mode known by itself and not described here for brevity.

In the event that no compensation of the orientation of camera 2 is performed (output branch N of step 1003) or after such compensation (downstream of step 1004), frame 10 is processed to identify the presence of one or more objects depicted in frame 10 (decision step 1005). For example, the processing of frames 10 is performed by an object recognition algorithm based on artificial vision (machine vision). Preferably, the object recognition algorithm comprises a convolutional neural network or CNN (Convolutional Neural Network), independently of the fast R-CNN or faster R-CNN type. In a non-limiting embodiment, the object recognition algorithm is trained to recognize images using a generic dataset such as COCO 2017 that also includes people (skiers) or vehicles. In addition or alternatively, the object recognition algorithm is trained using datasets specific to the field of use of the system. In case no objects are identified in the considered frame 10 (output branch N of step 1005), frame 10 is ignored (step 1006) and a new frame 10 provided by camera 2 is analyzed - in other words, procedure 1000 is repeated from step 1001.

Differently, when at least one object is identified (output branch Y of step 1005), the processing of frame 10 determines (step 1007) for each identified object O1-O3:

> i). a typology of the identified object (e.g., human, tree, car, bicycle, etc.) among those contemplated in the data set,
> ii). a bounding box B1-B3, i.e. the quadrilateral of minimum dimensions (with sides parallel to the edges of frame 10) within which all the points, i.e. pixels, of frame 10 representing the identified object are contained, as schematically shown in Figure 3B, and
> iii). preferably, although not limitatively, a confidence value of the performed identification (e.g., a percentage value)
> iv). X and Y coordinates of a pixel of frame 10 corresponding to a predetermined corner of the bounding box (e.g., the upper left corner) where the X coordinate indicates a position of the pixel in the direction of the width of frame 10 while the Y coordinate indicates a position of the pixel in the direction of the height of frame 10,
> v). a width value, hereinafter referred to simply as width L, corresponding to the width of the bounding box B1-B3 (e.g., measured in pixels),
> vi). a height value, hereinafter referred to simply as height A, corresponding to the height of the bounding box B1-B3 (e.g., measured in pixels), and

9

vii). a form factor value, hereinafter referred to simply as measured form factor Rm, corresponding to the ratio between height A and width L (i.e., Rm = A/L).

Any time the information set i). - vii). is determined for an object 01-03 is, then, checked whether frame 10 includes another object 01-03 to be analyzed (decision step 1008). In the affirmative case (output branch Y of step 1008), procedure 1000 is repeated from step 1007 to analyze another object 01-03. Otherwise, (output branch N of step 1008), all detected objects have been analyzed and procedure 1000 is reiterated from step 1001 to analyze a new frame 10 provided by camera 2

In conclusion, at each iteration of procedure 1000, each Object 01-03 present in a frame 10 acquired by camera 2 is identified and the information given above in step 1007 is obtained.

The distance calculation procedure 2000 is adapted to calculating the distance according to a first quick estimate based on the pre-stored parameter Kc for each type of recognizable objects, and then refine this estimate by considering two types of error: "Tilt Error" and " Rotation Error " obtaining a more reliable estimate.

The "Tilt Error" is due to vertical axes of camera 2 and object 01-03 considered not aligned - that is, not parallel to each other (as shown schematically in Figure 1 where the vertical axes are indicated with references N0-N3). For example, the tilt error occurs when a skier takes an inclined position with respect to the camera - as during a curve - so the respective bounding box is, generally, much wider and only slightly lower than the bounding box that contains a skier in an upright position, therefore, straight compared to the camera. As a result, the diagonal of the bounding box of the inclined skier is substantially greater than the diagonal of the bounding box for the same skier standing at the same distance from the camera. This error leads to an underestimation of the distance. The "Rotation Error" is due to a rotation of the object around its vertical axis - i.e., on itself (around its vertical) with respect to a frontal arrangement to the camera's field of view 2. For example, you have a rotation error when, for example, a wider and deeper object is rotated around its vertical axis so that it does not face the camera directly. In this case, the bounding box surrounding the object is smaller than the bounding box of the same object when facing the camera. This results in an overestimation of the actual distance. This results in an overestimation of the actual distance. On the contrary, when an object that is deeper than it is tall, such as a bus, is rotated around the vertical axis with respect to the camera, the distance is underestimated.

For each object 01-03 identified in frame 10, procedure 2000 receives the information calculated by procedure 1000 (step 2001), which includes the type of object recognised.

Based on the information provided by procedure 1000, a reference dimension of the bounding box B1-B3 is determined, preferably a diagonal D of the bounding box B1-B3 (step 2002).

The distance of the object is estimated by comparing the diagonal D of the bounding Box B1-B3 enclosing the recognised object with at least one corresponding comparison dimension stored in the system. Preferably, the at least one comparison dimension is associated with a respective bounding box enclosing an object of the same type at a known distance. Even more preferably, the reference objects used to define the comparison dimensions are depicted with a vertical axis parallel to the vertical axis of the camera 2 and with the front face-e.g., the front side of a person's body, the front of a vehicle, etc. - of the reference object arranged perpendicular to the plane of a frame 10 comprising the reference object.

Specifically, the distance of the recognised object is calculated as a function of the diagonal D of the bounding Box B1-B3 and a constant value, or coefficient, associated with the type to which the recognised object belongs (step 2003). Advantageously, for each identifiable object type the portable device 3 stores a corresponding constant value determined as a function of the object type and one or more characteristic parameters of the camera (e.g., focal apertures). In an embodiment, the distance Z is determined by means of the relation:

$$Z = \frac{1}{D} Kc, \qquad\qquad (1)$$

where D is the diagonal calculated at step 2002 while Kc is the constant value associated with the object type 01-03 identified among the pre-stored constant values for each object type 01-03 and the characteristic parameters of the camera 2. In an embodiment, each constant value Kc is determined, independently during a system calibration phase, Starting from known objects in a perpendicular and frontal position to camera 2 at a known distance. In particular, the Applicant has determined that the coefficient Kc which relates the distance between object 01-03 and camera 2 to the value of the reference diagonal Dr of the bounding box B1-B3 depends on the field of view associated with camera 2 and the measurement units of the bounding box size B1-B3 (e.g., pixels), that is unit of measurement per angle of view. For example, in the case of persons, Kc is about 1170 15%, considering a camera 2 with a vertical viewing angle of 62° and a horizontal viewing angle of 49° and a reference bounding box with a height value A between approximately 0 and approximately 815 pixels and a width value L between approximately 0 pixels and approximately 600 pixels - that is 13 pixels per viewing angle.

For example, to establish the value of the Kc parameter for the object type "person / human" given a camera with a given viewing angle and a given horizontal and vertical resolution, a person is filmed with camera 2 at a known distance, for example 2 meters, in a frontal and straight position with respect to the camera, this image is sent to the processing device 3 which recognizes the presence of the person and generates a bounding box with a height of A units and a width of L units. The diagonal D of the bounding box is then calculated. Let us assume, for example, that the diagonal D is equal to 10. The value of the diagonal D would have been calculated if the same person had been 1 meter away, in this case 20, is calculated and Kc is set equal to this value.

Advantageously, the generation of the Kc parameter for each object type is performed only once and the parameters are supplied to one or more systems according to the present invention. In this case, the camera used to acquire sample images may have characteristic parameters (e.g., aperture angle, horizontal and vertical resolution, form factor, etc.) different from camera 2. Therefore, it is planned to perform a compensation of any differences in the characteristic parameters to avoid introducing errors in the Kc parameter values due to the difference between the cameras.

Then when camera 2 shoots a person at an unknown distance, portable device 3 recognizes a person-object type in the image, and defines the corresponding bounding box and its dimensions in the same units with which Kc was defined. From these values we will calculate the diagonal D from the bounding box, let us say in this case equal to 5. Recalling the pre-stored value of Kc for object-type "person," formula (1) is applied to arrive at an estimated distance Z of 4 meters.

To increase the reliability of the estimate it is preferable to calculate the default value of Kc for each object type based on the average of a plurality of detections using different objects of the same type and/or at a plurality of different known distances. In the case of people, for example, Kc may be established on the basis of an average of Kc findings obtained by framing different persons with body size, height, position of the arms different but representative of those whose distance will subsequently have to be estimated. Several Kc constants may also be determined for a given object type to be used for various diameter size ranges. Since, in order to avoid collisions, not only the absolute distance but also the change of the distance in time is relevant, The error introduced, for example, by recognising an adult person when the object being framed is actually a child - an event that results in an underestimation of distance - has no impact on determining whether or not it is approaching.

The final calculation of the estimate is then carried out. Initially, pre-stored data related to the identified object type is retrieved (step 2004).

In the non-limiting realization form considered, the pre-stored data includes the following benchmarks:

- an expected form factor Ra,

- an expected depth parameter Pa, and

- an expected verticality or tilt parameter Va.

Specifically, in a shape realization, the expected form factor Ra is the ratio of the height to the width of a bounding box circumscribing a reference object of the same type as the considered object 01-03, facing camera 2. Therefore, the expected form factor Ra has an empirically predetermined decimal value for each recognizable object type. For example, the bounding box of a person upright with respect to the camera and facing the camera directly and with the arms in a natural position along the body is about 3.5. In other words, the parameters are determined from images of reference objects (for each type) acquired with the vertical axis of the reference object arranged parallel to the vertical axis of camera 2 and the front face of the reference object arranged perpendicular to one plane of the image (i.e., the front face is facing camera 2). In the example considered, the expression "front face" means a main portion, or face, of a static object (e.g., the surface of a billboard, the outline of a plant) or the portion, or face, of an object facing the direction of travel of the same, for a mobile object (e.g., a car, a person, a bicycle, etc.).

The expected depth parameter Pa provides an indication of the effect of a rotation around the vertical axis on the ratio between the height and width of the bounding box of the type of object to which the object O1-O3 considered belongs, which depends on the depth of the object 01-03. In the embodiment considered, the expected depth parameter Pa is a Boolean parameter and is defined as "false" if the shape of the object typology is such that the width of the bounding box decreases as the object rotates on itself with respect to a direction frontal to the camera 2 (zero angle) - for example, in the case of a human being -, while it is defined as "true" when the width of the bounding box increases in the case of such rotation - for example, in the case of a bus.

Preferably, the value of the expected depth parameter Pa for each object typology is determined by evaluating the variation in the dimensions of the bounding box of at least one reference object per typology in a plurality of different rotations in a range of rotation angles between a zero angle - i.e., the front face of the object perpendicular to the direction of the focal length of the camera - and a maximum angle Am, beyond which the object is considered to have a direction of movement not incident with the camera. For example, the maximum angle Am is set to $\pm 25°$ (i.e., Am = $\pm 25°$) in the case of collision avoidance applications. Consequently, the value of the expected depth parameter Pa for an object type is set to true if the bounding box width increases when the reference object has a rotation angle w in the range between zero degrees and the maximum angle Am ($0° \leq w \leq \pm Am$), or false if the bounding box width decreases when the reference object has a rotation in the same range.

In the case of object types with "squared" side faces, such as buses, the value of the depth parameter Pa for the object can be determined mathematically as follows. Given the maximum angle Am, and a parameter of proportion Rp equal to the ratio between width and depth of the type of objects considered, we have:

$$Pa = \text{False, if} \quad (cos(Am) + sin(Am))/Rp < 1, e \qquad (2)$$

$$Pa = \text{true,} \qquad \text{otherwise} \qquad (3)$$

So, for example, for the object type "bus" defined, in a non-exhaustive way, to have an average depth of 13m, an average width of 2.50m and therefore a parameter of proportion Rp equal to 0.19 (Rp = 0.19), and considering the maximum angle of 25° (Am = 25°), we have:

$$cos(25°) + sin(25°)/0,19 = 5.19$$

that is, a value greater than 1, so the depth parameter Pa is true for this type of object.

However, for other types of objects, particularly humans and other animals, which have blunt silhouettes the formula could lead to "false positives." In this case, a form of implementation of the presentation, it is planned to empirically establish the value of the expected depth parameter Pa, at least for object types having blunt silhouettes. For example, an empirical value can be calculated by measuring the value by framing an object belonging to the considered object type in a vertical position with respect to the vertical axis of the camera but rotated on itself up to an angle equal to the maximum angle Am, and then measuring the effect on the width of the bounding box with respect to the same subject facing the camera directly (i.e., with a null angle).

The expected tilt parameter or expected verticality Va is a Boolean parameter, which takes the value "true" if it is certain that the vertical axis of camera 2 is substantially parallel to the vertical axis of object type O1-O3, while otherwise it takes the value "false." In general, the expected verticality parameter Va can take the value true only if an algorithm of horizon correction is implemented or if the camera is in fixed position and horizontal, and also only if the object should not tilt (for example, a car), otherwise the value Va is assumed to be false in all cases. For example, the expected verticality parameter Va is considered true for a car shot by a camera 2 equipped with horizon correction, while for a skier or cyclist it is considered "false" regardless of camera 2 as these types of objects can frequently be tilted with respect to the horizon.

The parameters are defined for each of the object types identifiable by system 1 and stored by it. Preferably, the data is preloaded in a memory of the portable device 3. For example, the portable device 3 receives and stores directly the parameters Ra, Pa and Va for each type of identifiable object obtained by a system equivalent to system 1 in which the processing device 3 operates. The parameters Ra, Pa and Va for each type of identifiable object are then pre-stored in system 1. Alternatively, portable device 3 acquires or receives a plurality of reference images each comprising at least one identifiable object located at a known distance from camera 2 with main face facing the camera and vertical axis parallel to the camera axis-so that the parameters Ra, Pa, and Va can be determined for each type of identifiable object.

For simplicity of exposition, but not limitation, it is useful to define 10 categories based on the values of the set of parameters . Each type of identifiable object can correspond to a respective category as described below:

- category 1: Ra > 1, Pa = false e Va = false, comprising objects with a higher frontal section than wide and with small depth (i.e., smaller than the other dimensions), capable of tilting (e.g., human skiers) or not able to tilt (e.g. trees) but in the absence of horizon correction;
- category 2: Ra > 1, Pa = false e Va = true, comprising objects with a frontal section taller than wide and small depth that maintain a vertical axis substantially perpendicular to the ground (e.g., trees)- this category is definable only in systems equipped with horizon correction (otherwise these objects fall into category 1);
- category 3: Ra > 1, Pa = true e Va = false, comprising objects with a frontal section, or front face, that is higher than it is wide and a depth greater than its height that can tilt its vertical axis (e.g., motorcycle, bicycle) or is unable to tilt (e.g., truck with trailer) but in the absence of horizon correction;
- category 4: Ra > 1, Pa = true e Va = true, comprising objects with a front section, or front face, that is taller than wide and depth greater than height that maintain a vertical axis substantially perpendicular to the ground (e.g., tow trucks)-this category is definable only in systems equipped with horizon correction (otherwise these objects fall into category 3);
- category 5: Ra < 1, Pa = false e Va = false, comprising objects with a frontal section, or front face, wider than high and of small depth (rare that a moving object corresponds to this specification) which may or may not tilt but in the absence of horizon correction;

- category 6: Ra < 1, Pa = false e Va = true, comprising objects with a frontal section, or front face, which is wider than it is high and small depth (it is rare for a moving object to meet this specification) that cannot tilt and in the presence of horizon correction (otherwise these objects fall into category 5);
- category 7: Ra < 1, Pa = true e Va = false, including objects with a front section, or front face, which wider than it is tall and with a substantial depth (such as sports cars, speedboats; where the depth is generally the longest dimension) that can tilt (speedboat) or that cannot tilt (sports car) but in the absence of horizon correction;
- category 8: Ra < 1, Pa = true e Va = true, comprises objects with a front section, or front face, which is wider than it is high and with a substantial depth that cannot tilt (like sports cars) - this category can only be defined in systems equipped with horizon correction (otherwise these objects fall into category 7);
- category 9: Ra ≈ 1 (for example, Ra = 1±15%), Pa = false, independently from Va, comprising objects with a substantially square front section, or front face, and small depth, there are very limited cases of objects of this type being able to move;
- category 10: Ra ≈ 1 (for example, Ra = 1±15%), Pa = true, independently from Va, comprising objects with front section, or front face, substantially square and with a substantial depth (as particular minivans).

It will be clear that the possibility of attributing an object typology to one of the categories 2, 4, 6 or 8 also depends on whether or not a horizon correction algorithm is used (or on the certainty that the camera is always horizontal) as described above, as this contributes to the predetermination of the Va value for each object typology.

Similarly, it will be clear to the skilled person that the tolerance of ±20%, more preferably ±15%, indicated above which defines the range of values for which Ra is approximately equal to 1, is not to be understood in a limiting sense. On the contrary, in other embodiments, the tolerance value assumes a different value, for example the modulus of the tolerance value can assume any value between 0 and 20%, or between 0 and 15%, according to the needs contingent on the specific application.

In one embodiment, the association between each object typology detectable by the system 1 and a corresponding category 1-10 mentioned above is predefined. In this case, the portable device 3 stores a data structure - for example, a lookup table, a database, etc. - in which the membership category is defined for each type of object identifiable by the system.

Consequently, for each considered object 01-03 a category to which belongs, i.e. the object type, is identified based on the pre-stored parameters (step 2005). Alternatively, only the belonging category of each identifiable object type is pre-stored and each object 01-03 is associated with a corresponding category based on its type.

In series or in parallel, the measured form factor Rm and the expected form factor Ra are compared, to define whether the form factor Rm is greater than, less than, or equal to the expected form factor Ra (step 2006).

Based on the assigned category (at step 2005) and the result of the comparison between measured and expected form factors (from step 2006), it is defined whether the form factor R is to be corrected, and if so how (decision step 2007).

In considered embodiment, the decision of whether or not to apply a correction and the selection of a specific correction to be applied are followed as described below. Optionally, the method also includes reporting when the detection of an object is found to be unreliable or to be ignored, as well as reporting, even when a correction is applied, an indication or degree of reliability of the final result provided by Method 2000.

In the considered embodiment, the need to apply a correction and the choice of correction to be applied to the detections of each recognised Object 01-03 are determined based on the category 1 - 10 assigned to the object and the comparison between measured form factor Rm and expected form factor Ra.

In particular, if Rm = Ra ± x% - wherein x is predetermined tolerance value - for example x = 15, more generally 0 ≤ x ≤ 20 - (output branch N of step 2007), no correction is made to the calculation of the diagonal Dr of the bounding box B1-B3 of the object 01-03 (step 2008).

Otherwise, if the object 01-03

a. belongs to category 1 e Rm < Ra, o
b. belongs to category 7 o 8 e Se Rm > Ra:

A correction is applied- described in the following (step 2009, from output branch A of step 2007).

If the object 01-03

a. belongs to category 1 e Rm > Ra,
b. belongs to category 2 e Rm > Ra,
c. belongs to category 4 e Rm < Ra,

d. belongs to category 6 e Rm > Ra,
e. belongs to category 7 o 8 e Rm < Ra,
f. belongs to category 9 e Rm > Ra, o
g. belongs to category 10 e Rm < Ra:

B correction is applied- described in the following - in the computing of the diagonal Dr of the bounding box B1-B3 of the object 01-03 (step 2010, from output branch B of step 2007).

If the object 01-03

a. belongs to category 3 e Rm < Ra, o
b. belongs to category 5 e Rm > Ra:

C correction is applied- described in the following - in the computing of the diagonal Dr of the bounding box B1-B3 of the object 01-03 (step 2011, from output branch C of step 2007).

If the object 01-03

a. belongs to category 2 e Rm < Ra,
b. belongs to category 3 e Rm > Ra,
c. belongs to category 4 e Rm > Ra,
d. belongs to category 5 e Rm < Ra,
e. belongs to category 6 e Rm < Ra,
f. belongs to category 9 e Rm < Ra, o
g. belongs to category 10 e Rm > Ra:

no correction is performed and is generated a signal D - described in the following (step 2012, from output branch D of step 2007) and the method 2000 is reiterated from step 2001 to determine the distance between the camera 2 and another object 01-03 of which information is received from procedure 1000.

The "A correction" is a tilt (or inclination) error correction. Preferably, when A correction is applied a high reliability indication of the data thus corrected is generated.

The "B correction" is a rotation error correction. Preferably, when B correction is applied a high reliability indication of the data thus corrected is generated.

The "C correction" is a combined correction, obtained by averaging between correction A and correction B. Preferably, when C correction is applied an indication of low reliability of the corrected data is generated.

The "signal D" is an indication of low reliability of the data received. For example, the D signal indicates that the input data related to the specific object detection and/or its bounding box are not reliable, as they define a condition that should not occur in reality.

In a non-limiting way, the expressions: "report that this correction has a low/high degree of reliability", "report that the detection is not reliable" and "report that the form factor is reliable" (and their variants) are intended to generate data (for example a percentage value) including information on the reliability of the results provided by the 2000 procedure.

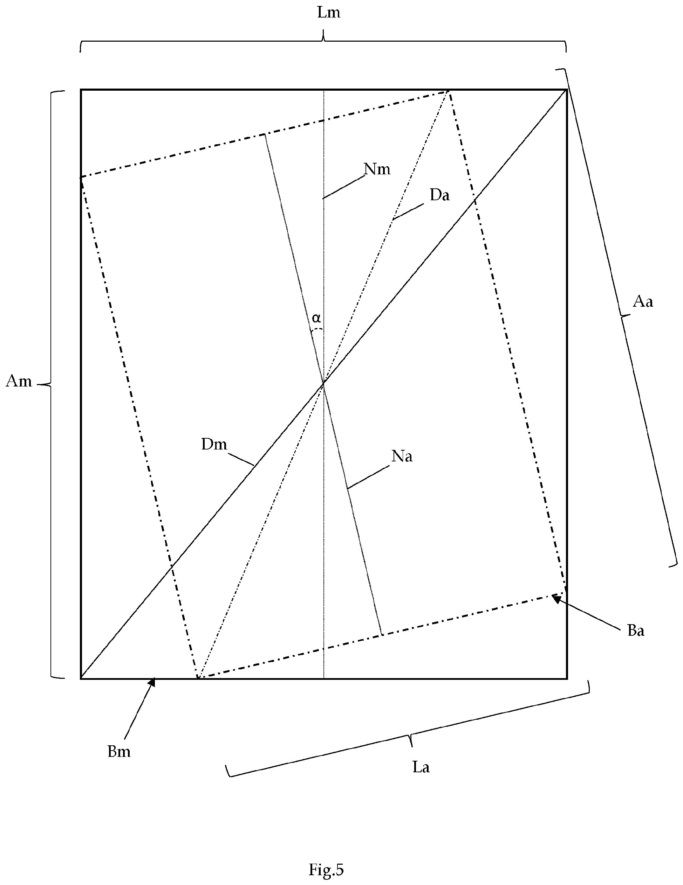

With reference to the example in Figure 5, the correction of the tilt error - i.e., correction A - involves determining the diagonal Da of a bounding box Ba (i.e., a rectangle with width La and height Aa) with a form factor equal to the expected form factor Ra whose vertices lie on the perimeter of the bounding box Bm with a measured form factor Rm and diameter Dm, as shown qualitatively in the example of Figure 5 (where Ra = Aa/La and Rm = Am/Lm). By reference to Figure 5, correction A involves determining the ratio between the diagonal Dm of the bounding box Bm and the diagonal Da of the bounding box Ba (i.e., a rectangle with width La and height Aa) from the measured form factor Rm and the expected form factor Ra. This is a problem that can be solved by applying geometric/trigonometric techniques - not described here for brevity. Applying correction A, the reference diagonal Dr is substantially equal to the diagonal Da of the bounding box surrounding the object 01-03 at the same distance but straight from the camera.

For example, consider the case in which the execution of method 1000 provides data for a bounding box Bm containing an object O1 of the type "human being," and that such a bounding box Bm has a measured form factor Rm of 2.5 (Rm = 2.5), thus different from the expected form factor Ra of 3.5 (Ra = 3.5) for the type "human being." In such a case, knowing the measured form factors Rm and expected Ra, by applying conventional geometric/trigonometric techniques the person experienced in the field can determine that the only possible value of the ratio between the diagonals Dm and Da is, in this case, about 1.064943. The diagonal Da of the bounding box Ba is, therefore, calculated from the diagonal Dm of the bounding box Bm and the calculated ratio between the diagonals Dm and Da (i.e., 1.064943). Similarly, it will be clear to the experienced person that the inclination a of the object O1 "human person" considered with respect to the camera is about 7.352370°, which is the only value of inclination that the vertical axes Nm and Na of the two bounding boxes Bm and Ba given Rm and Ra can have.

As regards correction B - that is, the correction of the rotation error -, it compensates for the width of the bounding box of object 01-03 when modified by the rotation of object 01-03 around its vertical axis. In this case, a corrected width is calculated as the ratio between the height A of the bounding box B1-B3 and the expected form factor Ra (i.e., the = A/Ra), and hence the relative diagonal. By applying correction B, the reference diagonal Dr substantially corresponds to the diagonal of the bounding box having height A and a corrected width L'.

Correction C - i.e., the compensation of rotation and tilt errors - requires that the corrected diagonal is calculated as the average of a first diagonal calculated by correction A and a second diagonal calculated by correction B. By applying correction C, the reference diagonal Dr is substantially equal to the average of the two diagonals calculated for object 01-03 at the same distance, straight in front of the camera and not rotated.

Downstream of the steps 2008-2011, the value of the reference diagonal Dr associated with a correct bounding box of the object 01-03 considered is available.

Below, a fine distance value, simply referred to as the distance Zr in the following, is calculated between object 01-03 and camera 2, i.e., skier 1, based on the reference diagonal (step 2013).

In the embodiment considered, the distance Zr is determined by means of the relation:

$$Z_r = \frac{1}{Dr} Kc, \qquad\qquad (4)$$

where Dr is the reference diagonal calculated at step 2008-2011 while Kc is the pre-stored constant value associated with the type of the considered Object 01-03 and characteristic parameters of camera 2.

After calculating the distance Zr for an Object 01-03, a set of output data, hereafter referred to simply as IO output, related to the object (step 2014) is generated. In the non-limiting example considered, the IO output includes the following data:

> i). the timestamp ts associated with the analysed frame 10 comprising the object 01-03,
> ii). the type of the identified object,
> iii). X,Y coordinates of the corner of the corresponding bounding box B1-B3,
> iv). width L, L' or L",
> v). height A or A',
> vi). distance Z, and
> vii). distance Zr .

Optionally, it is also provided:
viii).the confidence of the estimated distance Zr - i.e., the reliability indication - determined at step 2008-2011.

Finally, procedure 2000 is repeated by step 2001 to determine the distance between camera 2 and another object 01-03 about which information is received from procedure 1000.

Alternatively, the IO output may include data related to more than one object. For example, each IO output provided by procedure 2000 includes data associated with objects 01-03 detected in the same frame 10 acquired by camera 2 - hence, associated with the same timestamp.

In the non-limiting embodiment considered, the IO outputs generated by procedure 2000 are used by a procedure 3000 that determines whether one or more of the identified objects are getting excessively close to camera 2 and, hence, to the user. Preferably, procedure 3000 is adapted to compare data sets obtained from the analysis of a sequence of frames 10 to detect one or more approaching objects and provide a corresponding warning signal to user 1. Optionally, procedure 3000 is configured to discard or limit the weight of distance estimates associated with a low or substantially zero degree of confidence considered in steps 2005-2011.

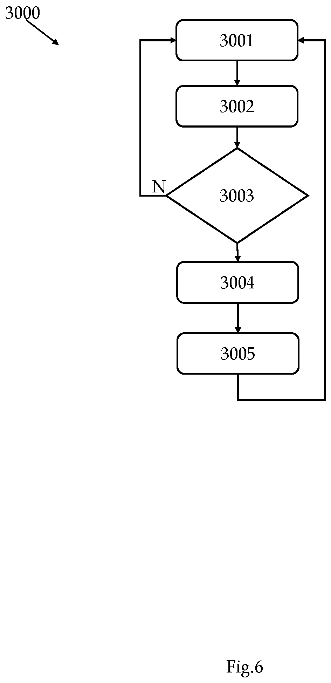

For example, procedure 3000 - of which Figure 6 is a flowchart - receives the IO outputs generated by procedure 2000 (step 3001). Through the analysis of IO outputs, a variation in distance between camera 2 and each detected object 01-03 is evaluated that has two or more consecutive frames 10 in which this object 01-03 appears (step 3002). In other words, the distance variation between camera 2 and each object O1-O3 over time is evaluated. This evaluation is used to detect one or more objects 01-03 where the distance between object 01-03 and camera 2 is reduced below a threshold value or, alternatively, an approach speed of the object 01-03 to camera 2 greater than a threshold value (decision step 3003). When no change in distance or speed is detected that exceeds the respective threshold value (output branch N of step 3003), the procedure is repeated by step 3001 to analyze new IO output information. Otherwise, when the change in distance, or in velocity of one or more Objects 01-03 exceeds the threshold value (output branch Y of step 3003), a position in space of such one or more objects is determined based on the IO outputs (step 3004) and, thus, an alarm signal indicative of the presence of the approaching Object 01-03 and its direction of approach is generated (step 3005). For example, the alarm signal provides a stereophonic sound using tones with pitch as a function of the change in distance velocity of the approaching Object 01-03, a general volume defined by an inverse function (e.g., inversely proportional) to the distance between camera 2 and the Object 01-03, and a right/left volume as a direct function of the relative position of the approaching Object 01-03 as a function of the X and/or Y coordinates of the Object 01-03.

The procedure is repeated from step 3001 with each new reception of IO output provided by procedure 2000.

It is clear, however, that the above examples should not be interpreted in a limiting sense, and the invention thus conceived is susceptible to many modifications and variations.

It will be apparent to the skilled person that the system and procedures according to the forms of embodiment described above are not limited to the scope of skiing activities, which is merely an example of application of the present invention. On the contrary, the system and procedures described above can also be used to increase safety in other activities such as cycling, motorcycling and other similar activities.

More generally, it will be evident that the system and procedures described above make it possible to easily and efficiently determine the distance of one or more objects detected by a single camera regardless of the subsequent use of this information.

In an alternative embodiment of the object identification procedure, a confidence value is calculated for each identified object in a generic frame and it is checked whether the confidence value is equal to or greater than a confidence threshold value - for example, 85%. Any object with a confidence value below the confidence threshold is ignored in the next steps. If all objects have been discarded the whole frame is ignored.

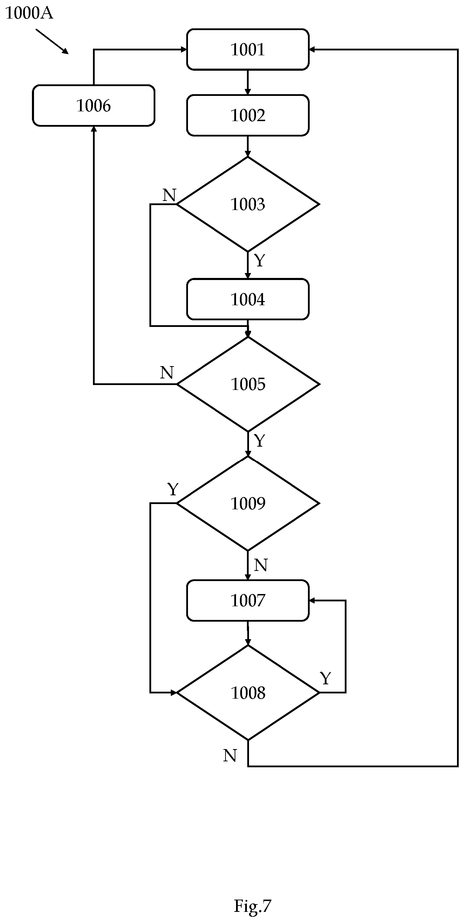

In addition or alternatively, a 1000A procedure for alternative object identification includes a sub-procedure for checking the "exceeding the edges" of objects. In detail, for each object 01-03 starting from the first object O1, it is verified if the object 01-03 considered, included in frame 10, is only partially portrayed in the frame (decision step 1009, in Figure 7), that is if there is a "exceeding the edges" of the object 01-03 outside frame 10. In one embodiment, the exceeding the edges of object 01-03 is verified if at least two between the coordinates of angle X,Y, a coordinate of maximum width X+L and a coordinate of maximum height Y+A are within a predetermined threshold distance from a corresponding frame reference edge 11-14 of frame 10, that is from the camera's FOV field of view margins. For example, the threshold distance from edges is set equal to a value between 2% and 6%, preferably equal to 5%, of the reference edge size 11-14 considered in frame 10. In detail, in the case of width value x increasing from left to right and height value y increasing from top to bottom in each frame 10, an overhang occurs if at least two of the following conditions are true: angle coordinate X is at a distance from the right edge 13 of frame 10 less than or equal to the threshold distance for edge 13, angle coordinate Y is at a distance from the bottom edge 14 of frame 10 less than or equal to the threshold distance for edge 14, maximum width coordinate X+L at a distance from the left edge 11 of frame 10 less than or equal to the threshold distance for edge 11, maximum height width Y+A at a distance from the top edge 12 of frame 10 less than or equal to the threshold distance for edge 12.

If an overflow of the considered Object 01-03 is identified (output branch Y of step 1009), the only partially depicted Object 01-03 in frame 10 is not considered and it is checked whether there are other Objects O1-O3 portrayed in frame 10 to be considered - that is, the operation proceeds to step 1008 described above. In other words, frame 10 is ignored in relation to the Object 01-03 for which the overflow is verified. When an overflow of the Object 01-03 outside of frame 10 is not verified (output branch N of step 1009), the information on the Object 01-03 is defined, that is, the operation proceeds to step 1007 described above. In addition, one or more steps of the same procedure 1000/1000A, 2000 or 3000 and/or two of the procedures described above - e.g., 1000/1000A and 2000, or 3000 and 2000 - may be executed in parallel with each other or in a different order than the one presented above. For example, two or more instances of procedure 2000 may be executed in parallel, each to evaluate the distance of a different identified object. Similarly, one or more optional steps may be added to or removed from one or more of the procedures described above.

For example, in an alternative form, in the case of an object "overflowing" towards a single edge of the frame, the data are not discarded, but the width or height of the bounding box of the affected object are estimated starting from the expected form factor of the identified object in a manner similar to that described above in the case of correction due to an object rotated around its vertical axis.

In other embodiments, at least the first estimate of the distance between the object and the camera is performed by means of a different technique than described above. For example, in an embodiment with a higher computational/energy consumption, a segmentation of the identified object within each bounding box is performed and then the pixels representing the object are counted. The distance is estimated by means of a formula whereby the distance is inversely proportional to the number of pixels in the object. In an alternative, simpler embodiment, the distance between the object and the camera is estimated based on the size of the bounding box area; again, the distance is inversely proportional to the size of the bounding box area.

Of course, all the details can be replaced by other technically equivalent elements.

For example, although the description refers to a system comprising a camera and a portable device, nothing prevents the system from being made as a single monolithic device or from providing a different processing device - such as a dedicated processing device.

In conclusion, the materials used, as well as the contingent shapes and dimensions of the devices, apparatuses and terminals mentioned above may be any according to the specific implementation needs without thereby departing from the scope of protection of the following claims.

## Claims

1. System (2,3) for measuring a distance of an object (01-03) from the system, the system comprising a single camera (2) and a processing device (3) connected to the camera (2),

   wherein the camera (2) acquires an image, and
   wherein the processing device (3):

      for each object type of a plurality of identifiable object types, pre-stores at least a parameter among:

         an expected form factor between height and width of the bounding box of at least one reference object,
         an expected depth data determined as a function of the variation of the measured form factor of the reference object as the rotation angle of a front face of the same changes with respect to the camera (2), and
         an expected verticality data determined based on at least one reference object of the object type, of a position of the camera (2) and/or presence/absence of a horizon correction of the acquired image from the camera (2),

      receives the acquired image,
      executes an image recognition algorithm that, for each recognised object in the acquired image:

         identifies the type to which belongs the recognised object among plurality of types of identifiable objects, and
         defines a bounding box that encloses the recognised object,

      determines a reference dimension of the bounding box,
      corrects the reference dimension of the bounding box of the recognised object by applying a correction criterion, wherein the correction criterion is selected as a function of the value of the at least one pre-stored parameter associated with the type of the recognised object and at least one characteristic of the bounding box of the recognised object, and
      computes a distance from the recognised object as a function of the reference dimension thus correct and at least one comparison dimension memorized in the system, wherein the at least one comparison dimension is associated with a respective bounding box that encloses a known object of the same type positioned at a known distance.

2. System (2,3) according to claim 1, wherein the at least one pre-stored parameter per each object type is determined:

   recognising un reference object in a reference image, and
   creating a corresponding reference bounding box, wherein the vertical axis of the reference object is parallel to the vertical axis of the camera (2) and the front face of the reference object is positioned perpendicularly with respect to a plane of the image.

3. System (2,3) according to claim 1 or 2, wherein the processing device (3) determines the expected depth data for each object type with a square profile being a logic data having a true value if:

$$\cos(Am) + \sin(Am)/Rp < 1$$

   wherein Am is a maximum trajectory angle of the object type with respect to the camera (2) and Rp is an average ratio between width and depth of the object type, and otherwise the expected depth data is determined to have a false value.

4. System (2,3) according to any one of the preceding claims, wherein the processing device (3) corrects the reference dimension by applying a correction criterion of a tilt error calculating a corrected bounding box having the expected form factor and corners lying on sides the bounding box of the recognised object.

5. System (2,3) according to any one of the preceding claims, wherein the processing device (3) corrects the reference dimension by applying a correction criterion of an rotation error by calculating a corrected width of the bounding box as a ration between the height of the bounding box that encloses the recognised object and the expected form factor for the recognised object type.

6. System (2,3) according to claims 4 and 5, wherein the processing device (3) corrects the reference dimension by applying a correction criterion of a composite error calculating a corrected reference dimension of the bounding box as an average of a first reference dimension calculated by applying the correction of the tilt error to the bounding box that encloses the recognised object and a second reference dimension calculated by applying the correction of the rotation error to the bounding box that encloses the recognised object.

7. System (2,3) according to any one of the preceding claims, wherein the processing device (3), for each object type, pre-stores the parameters of expected form factor, expected depth data and expected verticality data and selects which correction to apply to the reference dimension as a function of the value of said pre-stored parameters associated with the type of the recognised object and a form factor of the bounding box of the recognised object.

8. System (2,3) according to claim 4 and 7, wherein the processing device (3) identifies the need for correcting a tilt error, when:

$$Ra > 1, Pa = false, Va = false \text{ and } Rm < Ra, \text{ o}$$

$$Ra < 1, Pa = true \text{ and } Rm > Ra$$

where Ra is the expected form factor for the type of the recognised object, Pa is the expected depth data, Va is the expected verticality data and Rm is the measured form factor of the recognised object.

9. System (2,3) according to claim 5 and 7, wherein the processing device identifies the need for a correction of the rotation error, when:

$$Ra > 1, Pa = false, Va = false \text{ and } Rm > Ra,$$

$$Ra > 1, Pa = false, Va = true \text{ and } Rm > Ra,$$

$$Ra > 1, Pa = true, Va = true \text{ and } Rm < Ra,$$

$$Ra < 1, Pa = false, Va = true \text{ and } Rm > Ra,$$

$$Ra < 1, Pa = true, \text{ and } Rm < Ra,$$

$$Ra \approx 1, \text{ preferably } 1-x\% \leq Ra \leq 1+x\%, \text{ con } 0 \leq x \leq 20, Pa = false, \text{ and } Rm > Ra, \text{ o}$$

$$Ra \approx 1, \text{ preferably } 1-x\% \leq Ra \leq 1+x\%, \text{ con } 0 \leq x \leq 20, Pa = true, \text{ and } Rm < Ra,$$

where Ra is the expected form factor for the type of the recognised object, Pa is the expected depth data, Va is the expected verticality data and Rm is the measured form factor of the recognised object.

10. System (2,3) according to claim 6 and 7, wherein the processing device identifies the need for a composite correction, when:

$$Ra > 1, Pa = true \text{ and } Va = false \text{ and } Rm < Ra, \text{ o}$$

Ra < 1, Pa = false and Va = false and Rm > Ra,

where Ra is the expected form factor for the type of the recognised object, Pa is the expected depth data, Va is the expected verticality data.

11. System (2,3) according to any one of claims 7 - 10, wherein a result determined by the algorithm is considered unreliable when:

Ra > 1, Pa = false, Va = true and Rm < Ra,

Ra > 1, Pa = true and Rm > Ra,

Ra < 1, Pa = false and Rm < Ra,

Ra ≈ 1, preferably 1-x% ≤ Ra ≤ 1+x%, con 0 ≤ xa ≤ 20, Pa = false, and Rm < Ra, o

Ra ≈ 1 , preferably 1-x% ≤ Ra ≤ 1+x%, con 0 ≤ xa ≤ 20, Pa = true, and Rm > Ra.

12. System (2,3) according to any one of the preceding claims, wherein the processing device (3) pre-stores at least the expected form factor parameter and the at least one characteristic of the bounding box of the recognised object comprises a form factor of the bounding box, and
wherein the processing device (3) does not apply any correctio to the reference dimension when:
Rm = Ra ± x%, con 0 ≤ x ≤ 20, wherein Rm is the form factor of the bounding box of the recognised object calculated from the processing device and Ra is the expected form factor for the type of the recognised object.

13. System (2,3) according to any one of the preceding claims, wherein la reference dimension is a diagonal of the bounding box of the recognised object, and wherein the comparison dimension is a diagonal of the bounding box that encloses a known object of the same type at a known distance from the system (2,3) with a vertical axis parallel to a vertical axis of the camera (2) and with a front face parallel to a plane of the image.

14. System (2,3) according to claim 13, wherein the distance of the recognised object and the system is calculated by means of the formula:

$$Z = \frac{1}{D}Kc,$$

where D is a diagonal of the bounding box of the recognised object, Kc is a constant value memorized by the processing device (3) for each object type of the plurality of types, which is a function of the object type and characterising parameters of the camera (2).

15. System (2, 3) according to any one of the preceding claims, wherein the processing device (3) is adapted to calculate reliability of each recognised object and/or of the respective calculated distance, wherein each reliability is calculated as a function of the at least one parameter associated with the type of the corresponding recognised object and, preferably, of a difference between an expected form factor between height and width of the bounding box for an object of the recognised object type and a measured form factor between height and width of the bounding box of the recognised object.

16. Method for measuring the distance of an object (01-03) from a system (2, 3), the system comprising a single camera (2) and a processing device (3) connected to the camera (2),
the method comprising the steps of:

acquiring an image by means of the camera (2), and
by means of the processing device (3):

for each object type of a plurality of identifiable types, pre-storing at least one parameter among:

an expected form factor between height and width of the bounding box of at least one reference object,
an expected depth data determined as a function of the variation of the measured form factor of the reference object as the rotation angle of a front face of the same changes with respect to the camera (2), and
an expected verticality data determined based on at least one reference object of the object type, of a position of the camera (2) and/or presence/absence of a horizon correction of the acquired image from the camera (2),

receiving the acquired image,
executing an image recognition algorithm that, for each recognised object in the acquired image:

identifies the type to which belongs the recognised object among plurality of types of identifiable objects, and
defines a bounding box that encloses the recognised object,

determining a reference dimension of the bounding box,
correcting the reference dimension of the bounding box of the recognised object by applying a correction criterion, wherein the correction criterion is selected as a function of the value of the at least one pre-stored parameter associated with the type of the recognised object and at least one characteristic of the bounding box of the recognised object, and

computing a distance from the recognised object as a function of the reference dimension thus correct and at least one comparison dimension memorized in the system, wherein the at least one comparison dimension is associated with a respective bounding box that encloses a known object of the same type positioned at a known distance.

Fig.1

Fig.2

Fig.3A

Fig.3B

Fig.3C

2000

2001

2002

2003

2004

2005

2006

2007

N

2008

A

2009

B

2010

C

2011

D

2012

2013

2014

Fig.4

Fig.5

3000

3001

3002

N

3003

3004

3005

Fig.6

Fig.7

Europäisches
Patentamt

European
Patent Office

Office européen
des brevets

# EUROPEAN SEARCH REPORT

**Application Number**

EP 25 16 9868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/394435 A1 (TAKEYASU SATOSHI [JP]) 17 December 2020 (2020-12-17) | 1,7, 13-16 | INV. G06V10/25 |
| Y | * paragraphs [0022], [0023], [0026], | 2,4-6 | G06T7/73 |
| A | [0030], [0031], [0033], [0043], [0038], [0039] * | 3,8-12 | G06V10/764 |
| | ----- | | |
| A | US 2019/355140 A1 (UENO JUNYA [US]) 21 November 2019 (2019-11-21) * paragraph [0027] * | 1-16 | |
| | ----- | | |
| Y | US 2019/318481 A1 (CHEN I-KUEI [US]) 17 October 2019 (2019-10-17) * paragraphs [0044] - [0057] * | 2,4-6 | |
| | ----- | | |

**TECHNICAL FIELDS SEARCHED (IPC)**

G06V
G06T

The present search report has been drawn up for all claims

| Place of search | Date of completion of the search | Examiner |
|---|---|---|
| The Hague | 6 August 2025 | Natanni, Francesco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 9868

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | | Publication date | Patent family member(s) | | Publication date |
|---|---|---|---|---|---|
| US 2020394435 | A1 | 17-12-2020 | JP | 7003972 B2 | 21-01-2022 |
| | | | JP | 2020201746 A | 17-12-2020 |
| | | | US | 2020394435 A1 | 17-12-2020 |
| US 2019355140 | A1 | 21-11-2019 | NONE | | |
| US 2019318481 | A1 | 17-10-2019 | CN | 110386142 A | 29-10-2019 |
| | | | JP | 6878493 B2 | 26-05-2021 |
| | | | JP | 2019182415 A | 24-10-2019 |
| | | | US | 2019318481 A1 | 17-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090195371 A
- EP 3279830 A
- US 2020394435 A
- US 2019355140 A
- US 2019318481 A